(19) Europäisches Patentamt
European Patent Office
Office européen des brevets

(11) **EP 3 117 646 B1**

(12) **EUROPEAN PATENT SPECIFICATION**

(45) Date of publication and mention
of the grant of the patent:
**13.05.2020 Bulletin 2020/20**

(21) Application number: **14885223.9**

(22) Date of filing: **11.03.2014**

(51) Int Cl.:
*H04W 24/02* (2009.01)          *H04W 74/08* (2009.01)

(86) International application number:
**PCT/US2014/023018**

(87) International publication number:
**WO 2015/137920 (17.09.2015 Gazette 2015/37)**

(54) **APPARATUS AND METHOD OF SIMULTANEOUS WIRELESS TRANSMISSIONS**

VORRICHTUNG UND VERFAHREN FÜR SIMULTANE DRAHTLOSE ÜBERTRAGUNGEN

APPAREIL ET PROCÉDÉ DE TRANSMISSIONS SIMULTANÉES SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.01.2017 Bulletin 2017/03**

(73) Proprietor: **Intel IP Corporation
Santa Clara, CA 95054 (US)**

(72) Inventors:
 • **HUANG, Po-Kai
  San Jose, California 95131 (US)**
 • **STACEY, Robert J.
  Portland, Oregon 97210 (US)**

(74) Representative: **HGF Limited
Fountain Precinct
Balm Green
Sheffield S1 2JA (GB)**

(56) References cited:
 KR-A- 20090 035 568      KR-A- 20120 061 316
 US-A1- 2003 207 699      US-A1- 2010 226 344
 US-A1- 2012 020 257      US-A1- 2012 099 450

 • PAN LI ET AL: "An adaptive power controlled
  MAC protocol for wireless ad hoc networks",
  IEEE TRANSACTIONS ON WIRELESS
  COMMUNICATIONS, IEEE SERVICE CENTER,
  PISCATAWAY, NJ, US, vol. 8, no. 1, 1 January
  2009 (2009-01-01) , pages 226-233, XP011252072,
  ISSN: 1536-1276
 • KRUNZ M ET AL: "A power control scheme for
  MANETs with improved.throughput and energy
  consumption", WIRELESS PERSONAL
  MULTIMEDIA COMMUNICATIONS, 2002. THE
  5TH INTERNATION AL SYMPOSIUM ON OCT.
  27-30, 2002, IEEE, PISCATAWAY, NJ, USA, vol. 2,
  27 October 2002 (2002-10-27), pages 771-775,
  XP010619194, ISBN: 978-0-7803-7442-3
 • PABLO SOLDATI ET AL: "Proportionally fair
  allocation of end-to-end bandwidth in STDMA
  wireless networks", MOBIHOC 2006.
  PROCEEDINGS OF THE 7TH. ACM
  INTERNATIONAL SYMPOSIUM ON MOBILE AD
  HOC NETWORKING AND COMPUTING;
  [PROCEEDINGS OF THE ACM INTERNATIONAL
  SYMPOSIUM ON MOBILE AD HOC NETWORKING
  AND COMPUTING], NEW YORK, NY : ACM, US,
  22 May 2006 (2006-05-22), pages 286-297,
  XP058263499, DOI: 10.1145/1132905.1132937
  ISBN: 978-1-59593-368-3

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

Some demonstrative embodiments relate to an apparatus, product and method of simultaneous wireless transmissions.

### BACKGROUND

The proliferation of wireless communication devices may increase a number of wireless communication devices within an area. For example, an office may include a plurality of wireless communication devices, e.g., a wireless mouse, a wireless keyboard, a wireless display, routers, access points, Smartphones, laptops, desktop computers, and the like.

The wireless communication devices within the area may communicate in a plurality of wireless communication networks within the area. For example, the wireless mouse may communicate with the laptop, the wireless keyboard may communicate with the desktop computer, the Smartphone may communicate with the wireless display, and the like.

Increasing the number of the wireless communication devices within the area may increase network traffic, e.g., downlink and/or uplink traffic, within the area, which may lead to a relatively high-density environment.

The high-density environment may decrease a number of transmission opportunities of each wireless communication device within the area. For example, a wireless communication device may sense the environment, for example, to avoid collision and/or interference with other transmissions, before transmitting a transmission. According to this example, the device may have a reduced number of transmission opportunities, for example, if the environment is occupied for a relatively increased period of time.

US2012099450 relates to an apparatus to determine a channel gain to a second wireless device with which the first wireless device is communicating. In addition, the apparatus determines interferer backoff information that ensures an interference level at the first wireless device such that a signal received from the second wireless device can be decoded reliably. The interferer backoff information is determined based on the channel gain. Furthermore, the apparatus transmits information based on the interferer backoff information in one of an RTS message or a CTS message to the second wireless device.

PAN LI ET AL, "An adaptive power controlled MAC protocol for wireless ad hoc networks", IEEE TRANSACTIONS ON WIRELESS COMMUNICATIONS, vol. 8, no. 1, pages 226 - 233, relates to transmission power control (TPC). TPC has been extensively used not only to save energy, but also to improve the network throughput in wireless ad hoc networks. Among the existing throughput-oriented TPC protocols, many can achieve significant throughput improvement but have to use multiple channels and/or multiple transceivers, and others just require a single channel and a single transceiver but can only have limited throughput enhancement. An adaptive transmission power control protocol, ATPMAC, is proposed which can improve the network throughput significantly using a single channel and a single transceiver. Specifically, by controlling the transmission power, ATPMAC can enable several concurrent transmissions without interfering with each other. Moreover, ATPMAC does not introduce any additional signalling overhead.

### SUMMARY

Embodiments of the invention are set out in the appended claims.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.

Fig. 1 is a schematic block diagram illustration of a system, in accordance with some demonstrative embodiments.

Fig. 2 is a schematic illustration of a system deployment, in accordance with some demonstrative embodiments.

Fig. 3 is a schematic illustration of a graph depicting a data rate of a transmission versus a Signal to Noise Ratio (SNR) of the transmission, in accordance with some demonstrative embodiments.

Fig. 4 is a schematic illustration of a system deployment, in accordance with some demonstrative embodiments.

Fig. 5 is a schematic illustration of a timing diagram of a first transmission and a second transmission, in accordance with some demonstrative embodiments.

Fig. 6 is a schematic illustration of a deployment of wireless communication devices, in accordance with some demonstrative embodiments.

Fig. 7A is a schematic illustration of a system deployment, in accordance with some demonstrative embodiments.

Fig. 7B is a schematic illustration of a timing diagram of operations of wireless communication devices of the system deployment of Fig. 7A, in accordance with some demonstrative embodiments.

Fig. 8 is a schematic flow-chart illustration of a method of simultaneous wireless transmissions, in accordance with some demonstrative embodiments.

Fig. 9 is a schematic illustration of a product of manufacture, in accordance with some demonstrative embodiments.

## DETAILED DESCRIPTION

In the following detailed description, numerous specific details are set forth in order to provide a thorough understanding of some examples. However, it will be understood by persons of ordinary skill in the art that some examples may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one example", "an example", "demonstrative example", "various examples" etc., indicate that the example(s) so described may include a particular feature, structure, or characteristic, but not every example necessarily includes the particular feature, structure, or characteristic. Further, repeated use of the phrase "in one example" does not necessarily refer to the same example, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some examples may be used in conjunction with various devices and systems, for example, a Personal Computer (PC), a desktop computer, a mobile computer, a laptop computer, a notebook computer, a tablet computer, an Ultrabook™ computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some examples may be used in conjunction with devices and/or networks operating in accordance with existing Wireless-Gigabit-Alliance (WGA) specifications (Wireless Gigabit Alliance, Inc WiGig MAC and PHY Specification Version 1.1, April 2011, Final specification) and/or future versions and/or derivatives thereof, devices and/or networks operating in accordance with existing IEEE 802.11 standards (IEEE 802.11-2012, IEEE Standard for Information technology--Telecommunications and information exchange between systems Local and metropolitan area networks--Specific requirements Part 11: Wireless LAN Medium Access Control (MAC) and Physical Layer (PHY) Specifications, March 29, 2012; IEEE802.11 task group ac (TGac) ("IEEE802.11-09/0308r12 - TGac Channel Model Addendum Document"); IEEE 802.11 task group ad (TGad) (IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60GHz Band, 28 December, 2012)) and/or future versions and/or derivatives thereof, devices and/or networks operating in accordance with existing and/or Wireless Fidelity (WiFi) Alliance (WFA) Peer-to-Peer (P2P) specifications *(*WiFi P2P technical specification, version 1.2, 2012*),* and/or future versions and/or derivatives thereof, devices and/or networks operating in accordance with existing WirelessHD™ specifications and/or future versions and/or derivatives thereof, units and/or devices which are part of the above networks, and the like.

Some examples may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some examples may be used in conjunction with one or more types of wireless communication signals and/or systems, for example, Radio Frequency (RF), Infra Red (IR), Frequency-Division Multiplexing (FDM), Orthogonal FDM (OFDM), Time-Division Multiplexing (TDM), Time-Division Multiple Access (TDMA), Extended TDMA (E-TDMA), General Frame Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth®, Global Positioning System (GPS), Wi-Fi, Wi-Max, ZigBee™, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other examples may be used in various other devices, systems and/or networks.

The phrase "wireless device", as used herein, includes, for example, a device capable of wireless communication, a communication device capable of wireless communication, a communication station capable of wireless communication, a portable or non-portable device capable of wireless communication, or the like. In some demonstrative examples, a wireless device may be or may include a peripheral that is integrated with a computer, or a peripheral that is attached to a computer. In some demonstrative examples, the term "wireless device" may optionally include a wireless service.

The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit. The verb "communicating" may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device.

Some demonstrative examples may be used in conjunction with suitable limited-range or short-range wireless communication networks, for example, a wireless area network, a "piconet", a WPAN, a WVAN and the like. Other examples may be used in conjunction with any other suitable wireless communication network.

Some demonstrative examples may be used in conjunction with a wireless communication network communicating over a frequency band of 60GHz. However, other examples may be implemented utilizing any other suitable wireless communication frequency bands, for example, an Extremely High Frequency (EHF) band (the millimeter wave (mmwave) frequency band), e.g., a frequency band within the frequency band of between 30GHz and 300GHZ, a WLAN frequency band, a WPAN frequency band, a frequency band according to the WGA specification, and the like.

The term "antenna", as used herein, may include any suitable configuration, structure and/or arrangement of one or more antenna elements, components, units, assemblies and/or arrays. In some examples, the antenna may implement transmit and receive functionalities using separate transmit and receive antenna elements. In some examples, the antenna may implement transmit and receive functionalities using common and/or integrated transmit/receive elements. The antenna may include, for example, a phased array antenna, a single element antenna, a set of switched beam antennas, and/or the like.

The term "station" (STA), as used herein, may include any logical entity that is a singly addressable instance of a medium access control (MAC) and a physical layer (PHY) interface to a wireless medium (WM).

The phrase "access point" (AP), as used herein, may include an entity that contains one station (STA) and provides access to distribution services, via the WM for associated STAs.

The phrase "non-access-point (non-AP) station (STA)", as used herein, may relate to a STA that is not contained within an AP.

The phrase "peer to peer (PTP or P2P) communication", as used herein, may relate to device-to-device communication over a wireless link ("peer-to-peer link") between a pair of devices. The P2P communication may include, for example, wireless communication over a direct link within a QoS basic service set (BSS), a tunneled direct-link setup (TDLS) link, a STA-to-STA communication in an independent basic service set (IBSS), or the like.

The phrase "Peer-to-peer" (P2P) network, as used herein, may relate to a network in which a STA in the network can operate as a client or as a server for another STA in the network. The P2P network may allow shared access to resources, e.g., without a need for a central server.

The phrase "P2P device", as used herein, may relate to a WFA P2P device that may be capable of acting as both a P2P Group Owner and a P2P Client.

The phrase "P2P Client", as used herein, may relate to a P2P device that may be connected to a P2P Group Owner.

The phrase "P2P Group owner", as used herein, may relate to an "AP-like" entity, when referring to non-DMG networks, or to a PCP, when referring to DMG networks that may provide and use connectivity between clients.

The phrase "P2P Group", as used herein, may relate to a set of devices including one P2P Group Owner and zero or more P2P Clients.

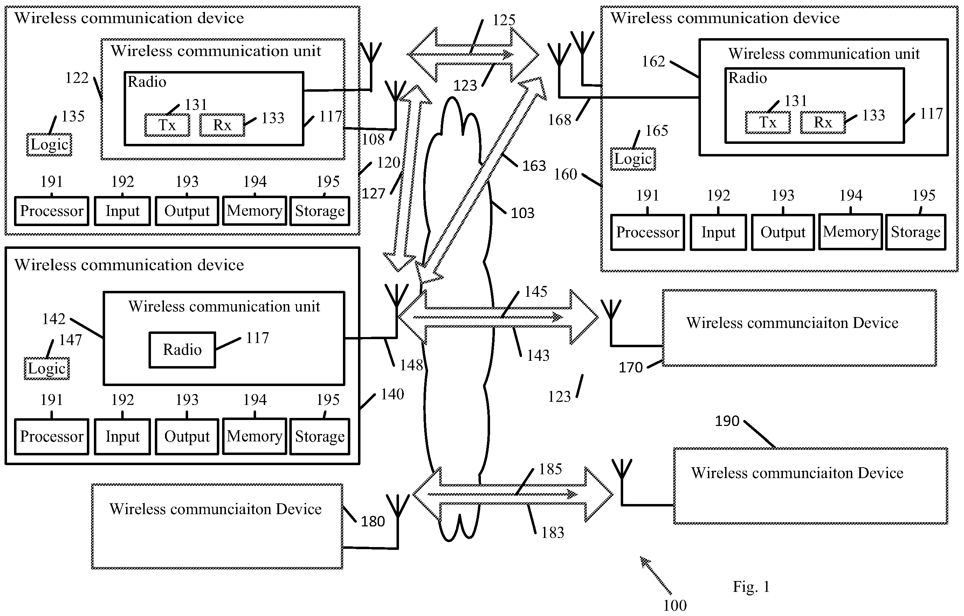

Reference is now made to Fig. 1, which schematically illustrates a block diagram of a system 100, in accordance with some demonstrative examples.

As shown in Fig. 1, in some demonstrative examples, system 100 may include one or more wireless communication devices, e.g., including wireless communication devices 120, 140, 160, 170, 180 and/or 190, capable of communicating content, data, information and/or signals over a wireless communication medium 103, for example, a radio channel, an IR channel, a RF channel, a Wireless Fidelity (WiFi) channel, and the like. One or more elements of system 100 may optionally be capable of communicating over any suitable wired communication links.

In some demonstrative examples, wireless communication devices 120, 140, 160, 170, 180 and/or 190 may include, for example, a PC, a desktop computer, a mobile computer, a laptop computer, an Ultrabook™ computer, a notebook computer, a tablet computer, a server computer, a handheld computer, a handheld device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a wireless display, a wireless storage, a music player, or the like.

In some demonstrative examples, wireless communication devices 120, 140, 160, 170, 180 and/or 190 may include wireless communication units to perform wireless communication between wireless communication devices 120, 140, 160, 170, 180 and/or 190 and/or with one or more other wireless communication devices. For example, wireless communication device 120 may include a wireless communication unit 122, wireless communication device 140 may include a wireless communication unit 142, and/or wireless communication device 160 may include a wireless communication unit 162.

In some demonstrative examples, the wireless communication units may include one or more radios. For example, wireless communication units 122, 142 and/or 162 may include a radio 117, e.g., including one or more wireless transmitters, receivers and/or transceivers able to send and/or receive wireless communication signals, RF signals, frames, blocks, transmission streams, frames, messages, data items, and/or data. In one example, the radios may include modulation elements, demodulation elements, amplifiers, analog to digital and digital to analog converters, filters, and/or the like. For example, radio 117 may include a transmitter (Tx) 131 and a receiver (Rx) 133. For example, wireless communication units 122, 142 and/or 162 may include or may be implemented as part of a wireless Network Interface Card (NIC), and the like.

In some demonstrative examples, the wireless communication units may include, or may be associated with, one or more antennas. For example, wireless communicate unit 122 may be associated with one or more antennas 108, wireless communicate unit 142 may be associated with one or more antennas 148 and/or wireless communicate unit 162 may be associated with one or more antennas 168.

Antennas 108, 148 and/or 168 may include any type of antennas suitable for transmitting and/or receiving wireless communication signals, blocks, frames, transmission streams, frames, messages and/or data. For example, antennas 108, 148 and/or 168 may include any suitable configuration, structure and/or arrangement of one or more antenna elements, components, units, assemblies and/or arrays. Antennas 108, 148 and/or 168 may include, for example, antennas suitable for directional communication, e.g., using beamforming techniques. For example, antennas 108, 148 and/or 168 may include a phased array antenna, a multiple element antenna, a set of switched beam antennas, and/or the like. In some examples, antennas 108, 148 and/or 168 may implement transmit and receive functionalities using separate transmit and receive antenna elements. In some examples, antennas 108, 148 and/or 168 may implement transmit and receive functionalities using common and/or integrated transmit/receive elements.

In some demonstrative examples, wireless communication devices 120, 140, 160, 170, 180 and/or 190 may also include, for example, a processor 191, an input unit 192, an output unit 193, a memory unit 194, and a storage unit 195. Wireless communication devices 120, 140, 160, 170, 180 and/or 190 may optionally include other suitable hardware components and/or software components. In some demonstrative examples, some or all of the components of wireless communication devices 120, 140, 160, 170, 180 and/or 190 may be enclosed in a common housing or packaging, and may be interconnected or operably associated using one or more wired or wireless links. In other examples, components of wireless communication devices 120, 140, 160, 170, 180 and/or 190 may be distributed among multiple or separate devices.

Processor 191 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. For example, processor 191 executes instructions, for example, of an Operating System (OS) of device 120 and/or of one or more suitable applications.

Memory unit 194 may include, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 may include, for example, a hard disk drive, a floppy disk drive, a Compact Disk (CD) drive, a CD-ROM drive, a DVD drive, or other suitable removable or non-removable storage units. For example, memory unit 194 and/or storage unit 195, for example, may store data processed by device 120.

Input unit 192 may include, for example, a keyboard, a keypad, a mouse, a touch-screen, a touch-pad, a trackball, a stylus, a microphone, or other suitable pointing device or input device. Output unit 193 may include, for example, a monitor, a screen, a touch-screen, a flat panel display, a Cathode Ray Tube (CRT) display unit, a Liquid Crystal Display (LCD) display unit, a plasma display unit, one or more audio speakers or earphones, or other suitable output devices.

In some demonstrative examples, system 100 may include one or more APs and one or more STAs. For example, device 120, device 140 and/or device 180 may perform the functionality of one or more APs, and/or device 170 and/or device 180 may perform the functionality of one or more STAs.

In some demonstrative examples, system 100 may include one or more P2P devices.

In some demonstrative examples, system 100 may include one or more P2P group owners and/or one or more P2P clients. For example, devices 120, device 140 and/or device 180 may perform the functionality of a P2P group owner and/or device 170 and/or device 160 may perform the functionality of a P2P client.

In some demonstrative examples, system 100 may include one or more wireless communication networks over WM 103. For example, system 100 may include one or more WiFi communication networks, one or more P2P communication networks and/or any other wireless communication networks over WM 103.

In one example, device 120 and device 160 may form a WiFi communication network and may communicate via a wireless communication channel 123 over the WiFi communication network; device 140 and device 170 may form a first P2P wireless communication network and may communicate via a wireless communication channel 143 over the first P2P wireless communication network; and/or device 180 and device 190 may form a second P2P wireless communication network and may communicate via a wireless communication channel 183 over the over the second P2P communication network.

In another example, device 120 and device 160 may form a first P2P wireless communication network and may communicate via wireless communication channel 123 over the first P2P wireless communication network; device 140 and device 170 may form a second P2P wireless communication network and may communicate via wireless communication channel 143 over the second P2P wireless communication network; and/or device 180 and device 190 may form a network a WiFi communication network and may communicate via wireless communication channel 183 over the WiFi communication network.

In another example, a first device of wireless communication devices 120, 140, 160, 170, 180 and/or 190 may from a WiFi communication network, P2P communication network or any other wireless communication network with a second, e.g., different, device of wireless communication devices 120, 140, 160, 170, 180 and/or 190 to communicate over a wireless communication channel.

In some demonstrative examples, wireless communication devices 120, 140, 160, 170, 180 and/or 190 may be located at a close proximity to each other. For example, wireless communication devices 120, 140, 160, 170, 180 and/or 190 may be located within a relatively small environment and/or area, e.g., an office, a room, an open space, an apartment, and the like.

In one example, an office may include a wireless display, a wireless keyboard, a wireless mouse, a Smartphone, a Laptop, an AP, a desktop computer, and/or the like. According to this example, the wireless mouse and/or the wireless keyboard my communicate with the laptop, for example, to increase a user experience of a user of the laptop; the Smartphone may communicate with the wireless display, for example, to display video from the Smartphone on the wireless display; the Smartphone, the desktop computer, and/or the laptop may communicate with the AP, for example, to access the Internet; and/or the like.

In some demonstrative examples, the location of wireless communication devices 120, 140, 160, 170, 180 and/or 190 within the small environment may increase network traffic within WM 103, which may result in a relatively high-density medium. For example, the network traffic within WM 103 may increase, for example, if a relatively large number of wireless communication devices communicate over WM 103.

As a result of the high-density of communications over wireless medium 103, wireless communication devices 120, 140, 160, 170, 180 and/or 190 may have a reduced number of transmission opportunities, for example, if a first device of wireless communication devices 120, 140, 160, 170, 180 and/or 190 is not allowed to transmit while a second device of wireless communication devices 120, 140, 160, 170, 180 and/or 190 transmits.

In one example, device 140 may sense WM 103 before performing a wireless transmission, e.g., to device 160, for example, to avoid collision and/or interference with other transmissions of wireless communication devices 120, 160, 170, 180 and/or 190. According to this example, device 140 may have a reduced number of transmission opportunities, for example, if wireless communication devices 120, 160, 170, 180 and/or 190 transmit over WM 103.

In some demonstrative examples, reducing the number of transmission opportunities for each device of wireless communication devices 120, 140, 160, 170, 180 and/or 190 may reduce network throughput of wireless communication devices 120, 140, 160, 170, 180 and/or 190 within the environment.

Some demonstrative examples may enable simultaneous wireless transmissions of wireless communication devices 120, 140, 160, 170, 180 and/or 190 within the environment, e.g., as described below.

In some demonstrative examples, wireless communication devices 120, 140, 160, 170, 180 and/or 190 may perform the simultaneous wireless transmissions, for example, if a transmission range of a transmission between a first device and a second device of devices 120, 140, 160, 170, 180 and/or 190 is less than a sensing range of a third device of devices 120, 140, 160, 170, 180 and/or 190.

In one example, an office may include a wireless keyboard, which communicates with a laptop; and a desktop computer, which communicates with an AP. According to this example, a transmission between the wireless keyboard and the laptop may have a transmission range of less than one meter, compared to a sensing range of the desktop computer, which may be greater than five meters, e.g., a size of a room, an office, or the like.

In another example, wireless communication devices 120, 140, 160, 170, 180 and/or 190 may be deployed in a dense environment, for example, in a stadium, an urban environment, an airport, and the like. According to this example, one or more of wireless communication devices 120, 140, 160, 170, 180 and/or 190 may perform short-range P2P communication, while one or more devices may communicate with one or more Access Points.

In some demonstrative examples, a first transmission from a first device of devices 120, 140, 160, 170, 180 and/or 190 may potentially cause a relatively reduced potential interference to a second transmission between a second device and a third device of devices 120, 140, 160, 170, 180 and/or 190, for example, if the first device is relatively far from the second and third devices, and the first transmission and the second transmission have a relatively short transmission range.

In some demonstrative examples, the potential interference caused by the first transmission to the second transmission may be relatively reduced, for example, if a signal strength of the second transmission is relatively high compared to the signal strength of the potential interference, e.g., since the first and second transmissions have a relatively short transmission range.

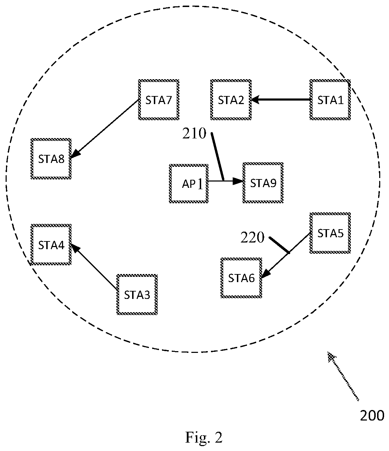

Reference is made to Fig. 2, which schematically illustrates a system deployment 200, in accordance with some demonstrative examples.

As shown in Fig. 2, system 200 may include a plurality of wireless communication devices. For example, one or more devices of the plurality of wireless communication devices of system 200 may perform the functionality of one or more wireless communication devices of system 100 (Fig. 1)

As shown in system 200, a first wireless communication device, denoted AP1, may transmit a first transmission 210 to a second wireless communication device, denoted STA9. For example, device 120 (Fig. 1) may transmit a transmission 125 (Fig. 1) to device 160 (Fig. 1).

As shown in system 200, a third wireless communication device, denoted STA5, may transmit a second transmission 220 to a second wireless communication device, denoted STA6. For example, device 140 (Fig. 1) may transmit a transmission 145 (Fig. 1) to device 170 (Fig. 1).

In some demonstrative examples, transmission 220 may be at least partially overlapping transmission 210.

As shown in Fig. 2, transmission 220 may not interfere with transmission 210, for example, since transmission 220 is being communicated relatively far from transmission 210 and transmissions 210 and 220 have a relatively short transmission range.

Referring back to Fig. 1, some demonstrative examples may enable a first device of wireless communication devices 120, 140, 160, 170, 180 and/or 190 to announce an interference margin for a first transmission to be transmitted by the first device. The interference margin may enable a second device of wireless communication devices 120, 140, 160, 170, 180 and/or 190 to transmit a second transmission at least partially overlapping the first transmission, for example, if a potential interference caused by the second transmission to the first transmission is within the interference margin announced by the first device, e.g., as described below.

In some demonstrative examples, transmission 125 may be transmitted from device 120 to device 140.

In some demonstrative examples, an interference margin corresponding to transmission 125 may enable device 140 to transmit transmission 145 to device 170 during a time period at least partially overlapping a time period of transmission 125.

In some demonstrative examples, the interference margin of transmission 125 may enable to transmit transmission 125, for example, without decreasing a data rate of transmission 125, e.g., by the potential interference caused by transmission 145.

In some demonstrative examples, wireless communication device 160 may include logic 165 to determine the interference margin of transmission 125 to be communicated between device 120 and device 160.

In some demonstrative examples, wireless communication device 120 may include logic 135 to determine the interference margin of transmission 125 based on information received from device 160, e.g., as described below.

In some demonstrative examples, at least some of the functionality of logic 135 may be implemented as part of wireless communication unit 122, and/or at least some of the functionality of logic 165 may be implemented as part of wireless communication unit 162. In some examples, the functionality of logic 135 may be distributed between wireless communication unit 122 and one or more other elements of wireless communication device 120; and/or the functionality of logic 165 may be distributed between wireless communication unit 162 and one or more other elements of wireless communication device 160. In other examples, logic 135 may be implemented as part of any other element of wireless communication device 120, and/or logic 165 may be implemented as part of any other element of wireless communication device 160. In some demonstrative examples, logic 135 and/or logic 165 may be implemented as part of a controller, a MAC, and/or any other element of device 120 and/or device 160.

In some demonstrative examples, logic 165 may determine the interference margin, for example, such that the potential interference to transmission 125 by transmission 145 may not result in a decrease of the data rate of transmission 125.

In some demonstrative examples, the data rate of transmission 125 may be based on a modulation and coding scheme (MCS) of transmission 125.

In some demonstrative examples, the interference margin of transmission 125 may be based on the MCS of transmission 125.

In some demonstrative examples, the MCS of transmission 125 may be determined based on a signal to noise ratio (SNR) of a signal received at wireless communication device 160 from wireless communication device 140, for example, prior to transmission 125.

In some demonstrative examples, logic 165 may determine the SNR of the signal based on a received signal strength of the signal and a white noise. For example, the SNR may be calculated by dividing the received signal strength by the white noise.

In some demonstrative examples, logic 165 may utilize a rate scaling algorithm to determine the MCS of transmission 125 based on the SNR.

In some demonstrative examples, the data rate of transmission 125 may be determined based on the MCS of transmission 125.

In one example, a first MCS having a first data rate may be determined based on a first SNR. According to this example, a second MCS having a second data rate, e.g., lesser than the first data rate, may be determined based on a second SNR, for example, lesser, than the first SNR, e.g., as described below.

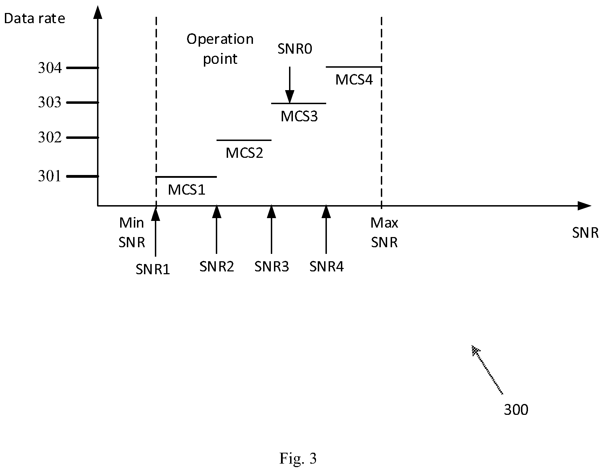

Reference is made to Fig. 3, which schematically illustrates a graph 300 depicting a data rate of a transmission versus an SNR of the transmission, in accordance with some demonstrative examples.

As shown in graph 300, a first MCS, denoted MCS1, may maintain a first data rate 301, e.g., a relatively reduced data rate, for SNR values greater than a first SNR value, denoted SNR1.

As shown in graph 300, a second MCS, denoted MCS2, may maintain a second data rate 302, e.g., greater than the first data rate, for SNR values greater than a second SNR value, denoted SNR2.

As shown in graph 300, a third MCS, denoted MCS3, may maintain a third data rate 303, e.g., greater than the second data rate, for SNR values greater than a third SNR value, denoted SNR3.

As shown in graph 300, a fourth MCS, denoted MCS4, may maintain a fourth data rate 304, e.g., a relatively increased data rate, for SNR values greater than a fourth SNR value, denoted SNR4.

In some demonstrative examples, the data rate of transmission 125 (Fig. 1) may not be greater than data rate 304, for example, if the MCS of transmission 125 (Fig. 1) is MCS4; the data rate of transmission 125 (Fig. 1) may not be greater than data rate 303, for example, if the MCS of transmission 125 (Fig. 1) is MCS3; the data rate of transmission 125 (Fig. 1) may not be greater than data rate 302, for example, if the MCS of transmission 125 (Fig. 1) is MCS2; and/or the data rate of transmission 125 (Fig. 1) may not be greater than data rate 301, for example, if the MCS of transmission 125 (Fig. 1) is MCS1.

In some demonstrative examples, logic 165 (Fig. 1) may determine the MCS of transmission 125 (Fig. 1) based on an SNR value, denoted SNR0, of a signal received by device 160 (Fig. 1).

In some demonstrative examples, logic 165 (Fig. 1) may determine SNR0 based on a received signal strength of the signal and a white noise, e.g., as described above.

In other examples, the SNR0 may be determined by wireless communication unit 122 (Fig. 1), e.g., based on the signal strength of signals transmitted by device 102 (Fig. 1).

As shown in Fig. 3, in some demonstrative examples, the value of SNR0 may be between SNR3 and SNR4.

In some demonstrative examples, logic 135 (Fig. 1) may determine MCS3 for transmission 125 (Fig. 1) based on the SNR0, for example, if the value of SNR0 is between SNR3 and SNR4.

In one example, logic 135 (Fig. 1) may determine MCS3 for transmission 125 (Fig. 1), for example, to enable using data rate 303 for transmission 125 (Fig. 1), based on the SNR0.

As shown in Fig. 3, MCS3 may maintain data rate 303 for transmission 125 (Fig. 1) for values greater than SNR3.

In some demonstrative examples, SNR0 may be decreased, for example, by a potential interference, down to SNR3, e.g., without decreasing data rate 303.

In some demonstrative examples, the interference margin may enable the potential interference to interfere with transmission 125 (Fig. 1), for example, such that the potential interference may not potentially decrease the SNR of transmission 125 (Fig. 1) to less than SNR3, and hence to maintain data rate 303 for transmission 125 (Fig. 1).

Referring back to Fig. 1, in some demonstrative examples, the interference margin may be based on an SNR of a signal received at wireless communication device 160 from wireless communication device 120 and a predefined SNR corresponding to the MCS.

In one example, the interference margin may be based on SNR0, SNR3, and MCS3. For example, SNR0 may include an SNR of a signal received at wireless communication device 160 from wireless communication device 120, MCS3 may include an MCS determined by logic 135 and/or SNR3 may include the predefined SNR, e.g., since SNR3 corresponds to MCS3, e.g., as described below.

In some demonstrative examples, SNR0 may be determined based on a signal strength, denoted S, and the white noise, denoted N, e.g., as follows:

$$SNR0 = S/N \hspace{4cm} (1)$$

In some demonstrative examples, wireless communication device 120 may utilize MCS3 to communicate transmission 125, e.g., as described above.

In some demonstrative examples, the predefined SNR corresponding to MCS3 may be SNR3, for example, since values greater than SNR3 maintain data rate 303 (Fig. 3).

Accordingly, an interference margin, denoted M, may be determined by requiring that an SNR resulting from the interference margin M will not be less than the SNR3, e.g., as follows

$$S/(N+M) = SNR3 \hspace{4cm} (2)$$

In some demonstrative examples, the interference margin M may be determined by substituting Equation 1 in equation 2, e.g., as follows:

$$M = SNR0*N/SNR3 - N \hspace{3cm} (3)$$

In another example, the interference margin M may be based on the SNR2, for example, if SNR0 is less than SNR3 and greater than SNR1. Accordingly, the interference margin M may be determined based on SNR2, SNR0 and MCS2, for example, since SNR2 corresponds to MCS2.

For example, the interference margin $M$ may be determined, e.g., as follows:

$$M = SNR0*N/SNR2 - N \qquad (4)$$

Referring back to Fig. 1, in some demonstrative examples logic 135 may determine the interference margin based on an agreement between device 120 and device 140.

In some demonstrative examples, logic 135 may determine the interference margin, for example, such that a potential interference caused by transmission 145 to transmission 125 may reduce the data rate of transmission 125, for example, down to a value determined by the agreement.

In some demonstrative examples, the agreement may include the interference margin of transmission 125 to be used by device 140; and/or an interference margin of transmission 145 to be used by device 120.

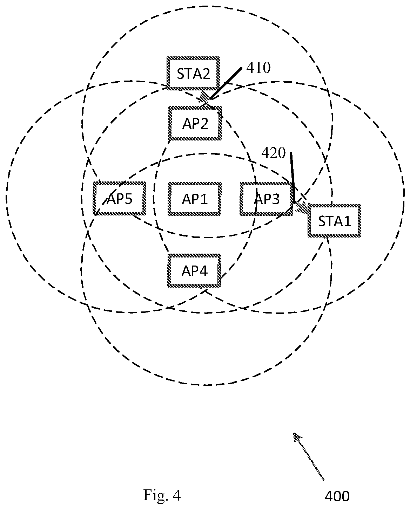

In some demonstrative examples, the agreement may enable simultaneous transmissions of transmission 125 and transmission 145, for example, even though the data rate of transmission 145 and/or the data rate of transmission 125 may be reduced, e.g., as described below with reference to Fig. 4.

Reference is made to Fig. 4, which schematically illustrates a system deployment 400, in accordance with some demonstrative examples.

In some demonstrative examples, one or more wireless communication devices of system 400 may perform the functionality of one or more devices of system 100 (Fig. 1).

As shown in system 400, a first wireless communication device, denoted AP2, may transmit a transmission 410 to a second wireless communication device, denoted STA2. For example, device 120 (Fig. 1) may transmit transmission 125 (Fig. 1) to device 160 (Fig. 1).

As shown in system 400, a third wireless communication device, denoted AP3, may transmit a transmission 420 to a second wireless communication device, denoted STA1. For example, device 140 (Fig. 1) may transmit transmission 145 (Fig. 1) to device 160 (Fig. 1).

As shown in system 400, transmission 410 may interfere with transmission 420, and vice versa. However, a network throughput of system 400 may increase, for example, since each wireless communication device of system 400 may have an increased number of transmission opportunities.

Referring back to Fig. 1, in some demonstrative examples, the agreement between devices 120 and 140 may be based on a first transmission period of transmission 125 and a second transmission period of transmission 145.

In some demonstrative examples, the interference margin of transmission 125 may be equal to the interference margin of transmission 145, for example, if the first and second transmission periods are equal.

In some demonstrative examples, the interference margin of transmission 125 may be greater than the interference margin of transmission 145, for example, if the first transmission period is lesser than the second transmission period.

In some demonstrative examples, the interference margin of transmission 125 may be greater than the interference margin of transmission 145, for example, to increase transmission opportunities of device 140, e.g., as described below.

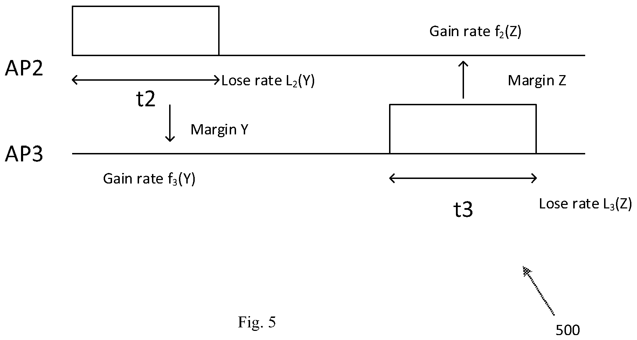

Reference is made to Fig. 5, which schematically illustrates a timing diagram of a first transmission of a first wireless communication device (AP2), and a second transmission of a second wireless communication device (AP3), in accordance with some demonstrative examples.

In some demonstrative examples, AP2 may perform the functionality of wireless communication device 120 (Fig. 1), and/or AP3 may perform the functionality of wireless communication device 140 (Fig. 1).

In some demonstrative examples, AP2 may announce an interference margin, denoted Y, for example, for transmission 125 (Fig. 1), to be used only by AP3; and AP3 may announce an interference margin, denoted Z, for example, for transmission 145 (Fig. 1), to be used only by AP2. According to this example, the value of interference margins Y and Z may depend on the agreement between AP3 and AP2.

As shown in Fig. 5, AP2 may transmit transmission 125 (Fig. 1) during a first time period, denoted t2.

As shown in Fig. 5, AP3 may transmit transmission 145 (Fig. 1) during a second time period, denoted t3.

In some demonstrative examples, a data rate of transmission 125 (Fig. 1) may be reduced by a first lose rate, denoted $L_2(Y)$, for example, if AP3 transmits during time period t2.

In some demonstrative examples, a data rate of transmission 145 (Fig. 1) may be reduced by a second lose rate, denoted $L_3(Z)$, for example, if AP2 transmits during time period t3.

In some demonstrative examples, AP3 may increase a data rate transmitted by AP3 by a first gain rate, denoted $f_3(Y)$, for example, if AP3 transmits during time period t2, e.g., during transmission 125 (Fig. 1).

In some demonstrative examples, AP2 may increase a data rate transmitted by AP2 a second gain rate, denoted $f_2(Z)$, for example, if AP2 transmits during time period t3, e.g., during transmission 145 (Fig. 1).

In some demonstrative examples, AP2 may determine interference margin Y, for example, such that AP2 gains more data rate $f_2(Z)$ during time period t3 compared to the loss of data rate $L_2(Y)$ during time period t2, e.g., as follows:

$$f2(Z)*t3 > L2(Y)*t2 \qquad (5)$$

In some demonstrative examples, AP3 may determine interference margin Z, for example, such that AP3 gains more data rate f3(Y) during time period t2 compared to the loss of data rate $L_3(Z)$ during time period t3, e.g., as follows:

$$f3(Y)*t2>L3(Z)*t3 \qquad (6)$$

In one example, AP2 may determine interference margin Y, e.g., according to Expression (5) and Expression (6), such that interference margin Y is greater than interference margin Z, for example, if AP3 announces interference margin Z and t2 is greater then t3.

In some demonstrative examples, AP2 may determine interference margin Y to be greater than interference margin Z, for example, to enable AP3 to gain enough data rate $f_3(Y)$ to compensate the loss rate $L_3(Z)$ of AP3.

In another example, AP3 may determine interference margin Z, e.g., according to Expression (5) and Expression (6), such that interference margin Z is greater than interference margin Y, for example, if AP2 announces interference margin Y and t3 is greater than t2.

In some demonstrative examples, AP3 may determine interference margin Z to be greater than interference margin Y, for example, to enable AP2 to gain enough data rate $f_2(Z)$ to compensate the loss rate $L_2(Y)$ of AP2.

Referring back to Fig. 1, in some demonstrative examples wireless communication device 120 and/or wireless communication device 160 may transmit an indication of the interference margin, for example, after determining the interference margin.

In some demonstrative examples, wireless communication device 120 may transmit to device 160 a request to send (RTS) frame to request to send transmission 125.

In some demonstrative examples, the RTS frame may include the interference margin.

In one example, wireless communication device 120 may utilize one or more bits of the RTS frame, which are not being used in the RTS frame, to announce the interference margin.

In some demonstrative examples, wireless communication device 160 may transmit a clear to send (CTS) frame to device 120, for example, to confirm the request to send transmission 125.

In some demonstrative examples, the CTS frame may include the interference margin.

In one example, wireless communication device 160 may utilize one or more bits of the CTS frame, which are not being used in the CTS frame, to announce the interference margin.

In some demonstrative examples, wireless communication device 120 may transmit the interference margin in a header of transmission 125.

In one example, wireless communication device 120 may add one or more additional bits to the header of transmission 125 to announce the interference margin.

In some demonstrative examples, wireless communication device 120 may transmit a dedicated announcement frame including the interference margin.

In other examples, wireless communication device 120 may transmit any other frame including the interference margin.

In some demonstrative examples, wireless communication device 140 may receive the interference margin of transmission 125.

In some demonstrative examples, wireless communication device 140 may receive the interference margin of transmission 125 in the RTS frame transmitted from device 120 to device 160, e.g., as described above.

In some demonstrative examples, wireless communication device 140 may receive the interference margin of transmission 125 in the header of transmission 125, e.g., as described above.

In some demonstrative examples, wireless communication device 140 may receive the interference margin of transmission 125 in the dedicated announcement frame, e.g., as described above.

In some demonstrative examples, wireless communication device 140 may receive the interference margin of transmission 125 in the CTS frame transmitted from device 160 to device 120, e.g., as described above.

In some demonstrative examples, wireless communication device 140 may transmit transmission 145 at least partially overlapping transmission 125, based on the interference margin.

In some demonstrative examples, wireless communication device 140 may transmit transmission 145, for example, if a potential interference to be caused by transmission 145 to transmission 125 does not exceed the interference margin.

In some demonstrative examples, wireless communication device 140 may include logic 147 to determine the potential interference based on a transmission power of transmission 145 and a channel gain of a wireless communication channel 163 between wireless communication device 140 and wireless communication device 160.

In some demonstrative examples, logic 147 determine the channel gain of wireless communication channel 163 based on a first channel gain of wireless communication channel 123 between wireless communication devices 120 and 160, and a second channel gain of a wireless communication channel 127 between wireless communication devices 120 and 140, e.g., as described below.

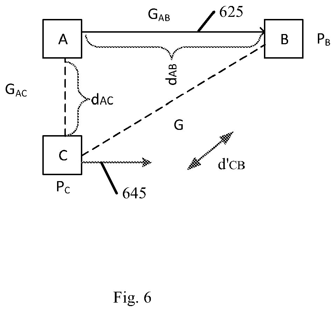

Reference is made to Fig. 6, which schematically illustrates a deployment of three wireless communication devices, denoted A, B and C, in accordance with some demonstrative examples. For example, device A may perform the functionality of wireless communication device 120 (Fig. 1), device B may perform the functionality of wireless communication device 160 (Fig. 1) and/or device C may perform the functionality of wireless communication device 140 (Fig. 1).

In some demonstrative examples, device A may send a transmission 625 to device B. For example, transmission 625 may perform the functionality of transmission 125 (Fig. 1).

In some demonstrative examples, device DA may announce an interference margin of transmission 625.

In some demonstrative examples, device C may receive the interference margin of transmission 625 from device A.

In some demonstrative examples, device C may determine an estimated interference, denoted *Int,* to device B, to be caused by a transmission 645, which is to be transmitted from device C. For example, transmission 645 may perform the functionality of transmission 145 (Fig. 1).

In some demonstrative examples, device C may estimate the interference *Int* based on a transmission from device B.

In one example, device C may estimate the interference *Int* based on a CTS frame transmitted from device B. In another example, device C may estimate the interference *Int,* for example, based on any other transmission from device B, e.g., a data packet, an acknowledge (ACK) transmission, and/or any other transmissions from device B.

In some demonstrative examples, the interference *Int* may be expressed, e.g., as follows:

$$Int = Pc * G \tag{7}$$

wherein Pc denotes a transmission power of device C, and G denotes a channel gain between devices B and C.

In some demonstrative examples, device B may include a transmission power of device B, denoted $P_B,$ in a header of a CTS frame from device B.

In some demonstrative examples, device C may receive the CTS and may determine a received signal strength, denoted *RSS,* of the CTS. The *RSS* may be expressed, e.g., as follows:

$$RSS = P_B * G \tag{8}$$

In some demonstrative examples, device C may determine the channel gain G, for example, by dividing the *RSS* by the transmission power $P_B$ of device B, e.g., in accordance with Equation 8.

In some demonstrative examples, device C may estimate the interference *Int* based on Equation 7, for example, by multiplying the channel gain G by the transmission power *Pc* of device C.

In some demonstrative examples, device C may estimate the interference *Int* based on a transmission from device A.

In one example, device C may estimate the interference *Int* based on an RTS frame transmitted from device A. In another example, device C may estimate the interference *Int,* for example, based on any other transmission from device A, e.g., data packets, and/or any other transmissions from device A.

In some demonstrative examples, device A may include a channel gain, denoted $G_{AB}$, of a wireless communication channel between device A and device B, in a header of the RTS frame from device A.

In other examples, device A may include the channel gain $G_{AB}$ in any other frame from device A, e.g., a data packet.

In some demonstrative examples, device C may receive the RTS frame including the channel gain $G_{AB}$ and may determine a channel gain, denoted $G_{AC},$ between device C and device A, e.g., as described below.

In some demonstrative examples, device C may determine a distance, denoted $d_{AB},$ between device A and device B, for example, based on the channel gain $G_{AB}$ and a path loss function.

In some demonstrative examples, device C may determine a distance, denoted $d_{AC},$ between device A and device C, for example, based on the channel gain $G_{AC}$ and the path loss function.

In some demonstrative examples, device C may determine a possible shortest distance, denoted $d'_{CB},$ between device C and device B, e.g., as follows:

$$d'_{CB} = | d_{AB} - d_{AC} | \qquad\qquad (9)$$

In some demonstrative examples, device C may determine the channel gain G based on the path loss function and the possible shortest distance $d'_{CB}$.

In some demonstrative examples, device C may estimate the interference *Int* based on the channel gain G, for example, according to Equation 7, e.g., as described above.

In some demonstrative examples, device C may transmit transmission 645 at least partially overlapping with transmission 625, for example, if the estimated interference *Int* is less than the interference margin announced by device A.

In some demonstrative examples, device C may adjust the transmission power Pc, such that that the estimated interference *Int* of transmission 645 is less than the interference margin.

In some demonstrative examples, device C may transmit transmission 645 based on a network allocation value (NAV) of transmission 625. For example, Device C may not transmit transmission 645, for example, if the NAV of transmission 625 is relatively short, e.g., less than a predefined threshold.

In one example, transmitting of transmission 645 when the NAV of transmission 625 is relatively short may not be beneficial, for example, since a transmission period of transmission 645 may be also relatively short. Accordingly, device C may transmit transmission 645, for example, only if the NAV of transmission 625 is greater than the predefined threshold.

Referring back to Fig. 1, in some demonstrative examples, logic 147 may backoff transmission 145, for example, upon detection of a third transmission 185 from wireless communication device 180.

In one example, wireless communication devices 180 and 140 may sense the same transmission opportunities over WM 103, for example, if devices 180 and 140 are located in close proximity to one another. According to this example, device 140 may not be the only device to transmit a transmission partially overlapping transmission 125. Therefore, upon detection of transmission 185 from device 180, logic 147 may be aware of device 180. Accordingly, device 140 may backoff, on each transmission opportunity to avoid possible collision with a transmission from device 180.

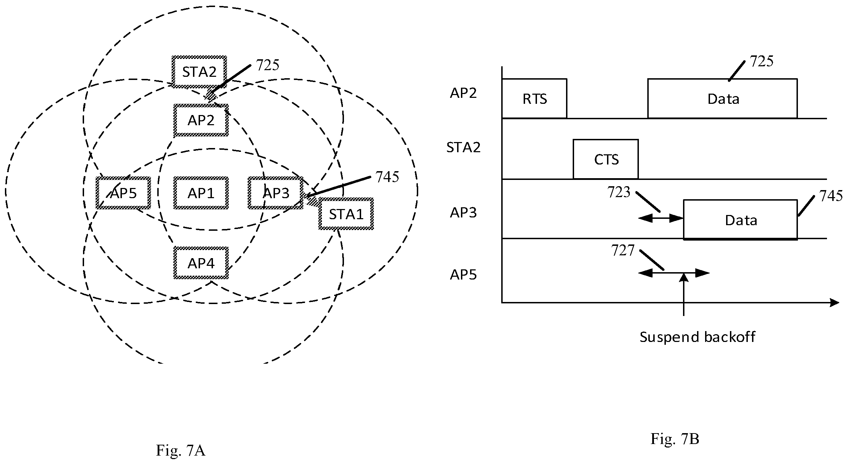

Reference is made to Fig. 7A, which schematically illustrates a system deployment 700, in accordance with some demonstrative examples.

In some demonstrative examples, system 700 may include a plurality of wireless communication devices, for example, system 700 may include a first AP, denoted AP2, a second AP, denoted AP3, a third AP, denoted AP5, a first STA, denoted STA1, and a second STA, denoted STA2. For example, one or more devices of system 700 may perform the functionality of one or more devices of system 100 (Fig. 1).

Reference is made to Fig. 7B, which schematically illustrates a timing diagram 720 of a backoff mechanism between the devices of system 700, in accordance with some demonstrative examples.

In some demonstrative examples, AP2 may transmit an RTS frame to STA2. STA2 may reply to AP2 with a CTS frame.

In some demonstrative examples, AP2 and/or STA 2 may announce an interference margin of a transmission 725 to be transmitted from AP2 to STA2.

In some demonstrative examples, AP3 and AP5 may receive the interference margin and may sense a transmission opportunity, for example, if AP2 transmits transmission 725.

In some demonstrative examples, AP3 and AP5 may backoff to avoid possible collision between AP3 and AP5. For example, AP3 may backoff for a first period 723 and/or AP5 may backoff for a second period 727.

In some demonstrative examples, AP3 may transmit a transmission 745, for example, if first period 723 is lesser than second period 727.

In some demonstrative examples, AP3 and AP5 may increase a Clear Channel Assessment (CCA) level, for example, to be a little greater than a received signal strength of transmission 725, e.g., to enable AP5 to differentiate transmission 725 from transmission 745.

In some demonstrative examples, AP3 and/or AP5 may not backoff transmissions. For example, AP3 may not backoff transmissions, for example, if AP3 assures that AP5 will not use the transmission opportunity, for example, based on agreement between AP3 and AP5.

In some demonstrative examples, enabling simultaneous transmissions of a plurality of wireless communication devices within an environment, for example, using an interference margin for a transmission, may increase a network throughput of the plurality of wireless communication devices within the environment, e.g., without decreasing performance of the plurality of wireless communication devices.

In some demonstrative examples, enabling the simultaneous transmissions may provide a solution to the growing number of wireless communication devices, which are located within an environment, without decreasing performance of the wireless communication devices.

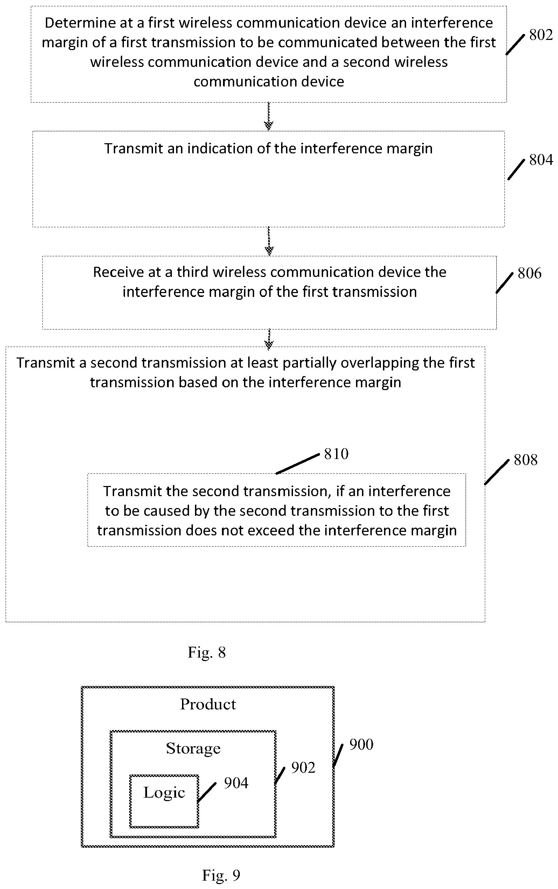

Reference is made to Fig. 8, which schematically illustrates a method of simultaneous wireless transmissions, in accordance with some demonstrative examples. In some demonstrative examples, one or more of the operations of the method of Fig. 8 may be performed by one or more elements of a system, e.g., system 100 (Fig. 1), a wireless communication device, e.g., wireless communication device 120 (Fig. 1), wireless communication device 140 (Fig. 1) and/or wireless communication device 160 (Fig. 1), a wireless communication unit, e.g., wireless communication unit 122 (Fig. 1), wireless communication unit 142 (Fig. 1), and/or wireless communication unit 162 (Fig. 1), and/or logic, e.g., logic 135 (Fig. 1), logic 165 (Fig. 1) and/or logic 147 (Fig. 1).

As indicated at block 802, the method may include determining at a first wireless communication device an interference margin of a first transmission to be communicated between the first wireless communication device and a second wireless communication device. For example, logic 135 (Fig. 1) may determine the interference margin of transmission 125 (Fig. 1), e.g., as described above.

As indicated at block 804, the method may include transmitting an indication of the interference margin. For example, wireless communication device 120 (Fig. 1) may transmit the indication of the interference margin of transmission 125 (Fig. 1), e.g., as described above.

As indicated at block 806, the method may include receiving at a third wireless communication device the interference margin of the first transmission. For example, wireless communication device 140 (Fig. 1) may receive the interference margin of transmission 125 (Fig. 1), e.g., as described above.

As indicated at block 808, the method may include transmitting a second transmission at least partially overlapping the first transmission, based on the interference margin. For example, wireless communication device 140 (Fig. 1) may transmit transmission 145 (Fig. 1) based on the interference margin of transmission 125 (Fig. 1), e.g., as described above.

As indicated at block 810, transmitting the second transmission may include transmitting the second transmission, if an interference to be caused by the second transmission to the first transmission does not exceed the interference margin. For example, wireless communication device 140 (Fig. 1) may transmit transmission 145 (Fig. 1), for example, if the interference to be caused by transmission 145 (Fig. 1) does not exceed the interference margin of transmission 125 (Fig. 1), e.g., as described above.

Reference is made to Fig. 9, which schematically illustrates a product of manufacture 900, in accordance with some demonstrative examples. Product 900 may include one or more tangible non-transitory machine-readable storage media 902 to store logic 904, which may be used, for example, to perform at least part of the functionality of device 120 (Fig. 1), device 140 (Fig. 1), device 160 (Fig. 1), wireless communication unit 122 (Fig. 1), wireless communication unit 142 (Fig. 1), wireless communication unit 162 (Fig. 1), logic 135 (Fig. 1), logic 165 (Fig. 1), logic 147 (Fig. 1), and/or to perform one or more operations of the method of Fig. 8. The phrase "non-transitory machine-readable medium" is directed to include all computer-readable media, with the sole exception being a transitory propagating signal.

In some demonstrative examples, product 900 and/or machine-readable storage media 902 may include one or more types of computer-readable storage media capable of storing data, including volatile memory, non-volatile memory, removable or non-removable memory, erasable or non-erasable memory, writeable or re-writeable memory, and the like. For example, machine-readable storage media 902 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative examples, logic 904 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative examples, logic 904 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Matlab, Pascal, Visual BASIC, assembly language, machine code, and the like.

Functions, operations, components and/or features described herein with reference to one or more examples, may be combined with, or may be utilized in combination with, one or more other functions, operations, components and/or features described herein with reference to one or more other examples, or vice versa.

**Claims**

1. A method comprising:

   determining at a first wireless communication device (120) an interference margin of a transmission to be communicated between said first wireless communication device (120) and a second wireless communication device (160), wherein said interference margin is based on a Signal to Noise Ratio, SNR, of a signal received at said first wireless communication device (120) from said second wireless communication device (140), and a predefined SNR corresponding to a Modulation and Coding Scheme, MCS, of said transmission; and transmitting an indication of said interference margin.

2. The method of claim 1 comprising transmitting a request to send, RTS, frame, including said interference margin, from said first wireless communication device (120) to said second wireless communication device (160); and transmitting said transmission to said second wireless communication device (160).

3. The method of claim 1 comprising transmitting a clear to send, CTS, frame, including said interference margin, from said first wireless communication device (120) to said second wireless communication device (160), and receiving said transmission from said second wireless communication device (160).

4. The method of any one of claims 1-3 comprising transmitting said interference margin in a header of said transmission.

5. The method of any one of claims 1-4 comprising transmitting an announcement frame including said interference margin.

6. A wireless communication device (120) comprising means to perform the method of any one of claims 1 to 5.

7. A product (900) including a non-transitory storage medium (902) having stored thereon instructions that, when executed by a machine, result in the method of any one of claims 1 to 5.

**Patentansprüche**

1. Verfahren, umfassend:

   Bestimmen, in einer ersten drahtlosen Kommunikationsvorrichtung (120), einer Störungsreserve einer zwischen der ersten drahtlosen Kommunikationsvorrichtung (120) und einer zweiten drahtlosen Kommunikationsvorrichtung (160) zu übermittelnden Übertragung, wobei die Störungsreserve auf einem Rauschabstand SNR eines in der ersten drahtlosen Kommunikationsvorrichtung (120) von der zweiten drahtlosen Kommunikationsvorrichtung (140) empfangenen Signals und einem vordefinierten SNR, der einem Modulations- und Codierungsschema MCS der Übertragung entspricht, basiert; und Übertragen einer Angabe der Störungsreserve.

2. Verfahren nach Anspruch 1, umfassend: Übertragen eines Sendeanforderungs- bzw. RTS-Rahmens, der die Störungsreserve umfasst, von der ersten drahtlosen Kommunikationsvorrichtung (120) zu der zweiten drahtlosen Kommunikationsvorrichtung (160); und Übertragen der Übertragung zu einer zweiten drahtlosen Kommunikationsvorrichtung (160).

3. Verfahren nach Anspruch 1, umfassend: Übertragen eines Sendebereitschafts- bzw. CTS-Rahmens, der die Störungsreserve umfasst, von der ersten drahtlosen Kommunikationsvorrichtung (120) zu der zweiten drahtlosen Kommunikationsvorrichtung (160) und Empfangen der Übertragung von der zweiten drahtlosen Kommunikationsvorrichtung (160).

4. Verfahren nach einem der Ansprüche 1-3, das Übertragen der Störungsreserve in einem Header der Übertragung umfasst.

**5.** Verfahren nach einem der Ansprüche 1-4, das Übertragen eines die Störungsreserve umfassenden Ansagerahmens umfasst.

**6.** Drahtlose Kommunikationsvorrichtung (120) mit Mitteln zum Ausführen des Verfahrens nach einem der Ansprüche 1 bis 5.

**7.** Produkt (900), das ein nichttransitorisches Speichermedium (902) umfasst, auf dem Anweisungen gespeichert sind, die, wenn sie durch eine Maschine ausgeführt werden, zu dem Verfahren nach einem der Ansprüche 1 bis 5 führen.

**Revendications**

**1.** Procédé comprenant :

la détermination au niveau d'un premier dispositif de communication sans fil (120) d'une marge de brouillage d'une transmission destinée à être communiquée entre ledit premier dispositif de communication sans fil (120) et un second dispositif de communication sans fil (160), dans lequel ladite marge de brouillage est basée sur un rapport signal/bruit, SNR, d'un signal reçu au niveau dudit premier dispositif de communication sans fil (120) depuis ledit second dispositif de communication sans fil (140), et d'un SNR prédéfini correspondant à un plan de modulation et de codage, MCS, de ladite transmission ; et
la transmission d'une indication de ladite marge de brouillage.

**2.** Procédé selon la revendication 1 comprenant la transmission d'une trame de demande de transmission, RTS, comportant ladite marge de brouillage, par ledit premier dispositif de communication sans fil (120) audit second dispositif de communication sans fil (160) ; et la transmission de ladite transmission audit second dispositif de communication sans fil (160).

**3.** Procédé selon la revendication 1 comprenant la transmission d'une trame "prêt à émettre", CTS, comportant ladite marge de brouillage, par ledit premier dispositif de communication sans fil (120) audit second dispositif de communication sans fil (160), et la réception de ladite transmission en provenance dudit second dispositif de communication sans fil (160).

**4.** Procédé selon l'une quelconque des revendications 1 à 3 comprenant la transmission de ladite marge de brouillage dans un en-tête de ladite transmission.

**5.** Procédé selon l'une quelconque des revendications 1 à 4 comprenant la transmission d'une trame d'annonce comportant ladite marge de brouillage.

**6.** Dispositif de communication sans fil (120) comprenant des moyens pour réaliser le procédé selon l'une quelconque des revendications 1 à 5.

**7.** Produit (900) comportant un support de mémorisation non transitoire (902) sur lequel sont mémorisées des instructions qui, à leur exécution par une machine, donnent lieu au procédé selon l'une quelconque des revendications 1 à 5.

Fig. 1

Fig. 2

Fig. 3

EP 3 117 646 B1

Fig. 4

AP2

Gain rate f₂(Z)

Lose rate L₂(Y)

t2

Margin Z

Margin Y

AP3

Gain rate f₃(Y)

t3

Lose rate L₃(Z)

500

Fig. 5

Fig. 6

Fig. 7A

Fig. 7B

EP 3 117 646 B1

Determine at a first wireless communication device an interference margin of a first transmission to be communicated between the first wireless communication device and a second wireless communication device

／ 802

Transmit an indication of the interference margin

／ 804

Receive at a third wireless communication device the interference margin of the first transmission

／ 806

Transmit a second transmission at least partially overlapping the first transmission based on the interference margin

／ 810

Transmit the second transmission, if an interference to be caused by the second transmission to the first transmission does not exceed the interference margin

／ 808

Fig. 8

Product

Storage

Logic ／ 904

／ 902

／ 900

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012099450 A

**Non-patent literature cited in the description**

- **PAN LI et al.** An adaptive power controlled MAC protocol for wireless ad hoc networks. *IEEE TRANSACTIONS ON WIRELESS COMMUNICATIONS,* vol. 8 (1), 226-233
- Wireless Gigabit Alliance. Inc WiGig MAC, April 2011
- **MARCH 29, 2012.** IEEE 802.11-2012, IEEE Standard for Information technology--Telecommunications and information exchange between systems Local and metropolitan area networks--Specific requirements Part 11. *Wireless LAN Medium Access Control (MAC) and Physical Layer (PHY) Specifications*
- IEEE802.11 task group ac (TGac). *IEEE802.11-09/0308r12 - TGac Channel Model Addendum Document*
- IEEE P802.11ad-2012, IEEE Standard for Information Technology - Telecommunications and Information Exchange Between Systems - Local and Metropolitan Area Networks - Specific Requirements - Part 11. *Wireless LAN Medium Access Control (MAC) and Physical Layer (PHY) Specifications - Amendment 3*
- *Enhancements for Very High Throughput in the 60GHz Band,* 28 December 2012
- *WiFi P2P technical specification,* 2012